# EUROPEAN PATENT APPLICATION

(11) **EP 3 978 933 A1**
(43) Date of publication of application: **06.04.2022**
(21) Application number: 20815397.3
(22) Date of filing: 13.05.2020
(51) Int. Cl.: G01P 5/10, G01F 1/688

(54) **FLOW SENSOR CHIP**

(30) Priority: 24.05.2019 JP 2019097567
(71) Applicant: MMI Semiconductor Co., Ltd., Tama-shi, Tokyo, 206-8567 (JP)
(72) Inventor: NAKANO, Yu, Kyoto-shi, Kyoto 600-8530 (JP); KASAI, Takashi, Kyoto-shi, Kyoto 600-8530 (JP); MOMOTANI, Koji, Kyoto-shi, Kyoto 600-8530 (JP)
(74) Representative: Regimbeau
(86) International application number: PCT/JP2020/019136
(87) International publication number: WO 2020/241262

(57) **Abstract**

A flow sensor chip capable of preventing power from being wasted during the electrification of a heater is provided. The flow sensor chip includes a first lead portion connected to an end of a heater portion, a second lead portion connected to the other end of the heater portion, a first electrode pad connected, directly or through a connection portion formed of a material having an electrical conductivity equal to or greater than the heater conductivity, to an end of the first lead portion on a side which is not connected to the heater portion, and a second electrode pad connected, directly or through a connection portion formed of a material having an electrical conductivity equal to or greater than the heater conductivity, to an end of the second lead portion on a side which is not connected to the heater portion.

## Description

### Technical Field

The present invention relates to a flow sensor chip.

### Background Art

A sensor chip (hereinafter referred to as a flow sensor chip) in which a thin film-like portion including two temperature measuring sensors and a heater disposed therebetween is provided on a first surface of a substrate having a cavity that opens on a first surface side is known.

Various flow sensor chips having different specific configurations have been developed and proposed (see PTL 1 to PTL 3), but existing flow sensor chips have a heater (heater pattern) formed of a single material.

### Citation List

### Patent Literature

PTL 1: European Patent Application Publication No. 3404373 (Specification)
PTL 2: Japanese Patent Application Laid-open No. 2012-127965
PTL 3: Japanese Patent Application Laid-open No. H08-122118

### Summary of Invention

### Technical Problem

As described above, existing flow sensor chips have a heater formed of a single material. For this reason, the existing flow sensor chips have a problem that power is wasted when the heater is electrified.

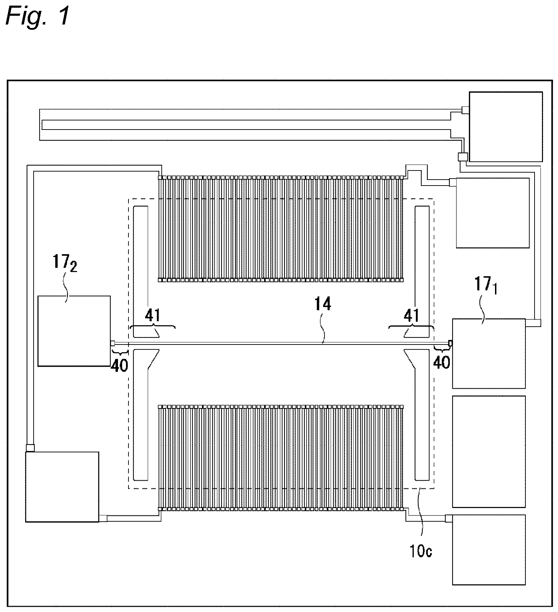

Hereinafter, the reason why the above-described problem occurs will be described by taking a flow sensor chip having a configuration illustrated in Fig. 1, that is, a flow sensor chip using a linear conductor pattern as a heater 14, as an example.

When a current is applied to the heater 14 of the flow sensor chip (Fig. 1), the same amount of heat is generated in each unit of the heater 14. However, in a thermal flow sensor chip in which a heater is formed of a single material, the central portion of the heater 14 is positioned on a cavity 10c of a substrate, and ends 40 of the heater 14 are positioned on the substrate (on a portion of the substrate other than the cavity 10c) as illustrated in Fig. 1. In addition, since heat generated by the ends 40 positioned on the substrate escapes to the substrate side, the temperature of the ends 40 becomes lower than the temperature of the central portion even when a current is applied to the heater 14. In addition, due to this influence, the temperature of a portion 41 closer to the center of the heater than the ends 40 is also lowered, and thus portions (the ends 40 and the portion 41) other than the central portion of the heater 14 are portions that consume power (that is, portions that waste power) in the flow sensor chip even though the temperature does not rise to a desired temperature.

The present invention is contrived in view of the above-described problems, and an object thereof is to provide a flow sensor chip capable of preventing power from being wasted when a heater is electrified.

### Solution to Problem

In order to solve the above-described problem, according to an aspect of the present invention, a thin film-like portion of a flow sensor chip, including a substrate portion which includes a cavity opening on a first surface side and the thin film-like portion which is provided on the first surface of the substrate portion, includes two thermopiles having a plurality of hot junctions that are lined up in a first direction and disposed to face each other, a heater portion disposed between the two thermopiles and extending in the first direction, a first lead portion, connected to an end of the heater portion, which is formed of a material having an electrical conductivity higher than a heater conductivity which is an electrical conductivity of a constituent material of the heater portion, a second lead portion, connected to the other end of the heater portion, which is formed of a material having an electrical conductivity higher than the heater conductivity, a first electrode pad connected, directly or through a connection portion formed of a material having an electrical conductivity equal to or greater than the heater conductivity, to an end of the first lead portion on a side which is not connected to the heater portion, and a second electrode pad connected, directly or through a connection portion formed of a material having an electrical conductivity equal to or greater than the heater conductivity, to an end of the second lead portion on a side which is not connected to the heater portion.

That is, in the flow sensor chip according to the aspect of the present invention, end sides (the first lead portion, the second lead portion) of the heater are formed of a material having an electrical conductivity higher than that of the constituent material of the heater portion which is a main portion of the heater. Thus, according to the flow sensor chip, it is possible to prevent power from being wasted during the electrification of the heater.

The constituent materials of the heater portion, the first lead portion, and the second lead portion may satisfy the above-described conditions related to an electrical conductivity. However, in order to prevent an increase in the number of manufacturing steps of the flow sensor chip, it is preferable that any one of the heater portion, the first lead portion, and the second lead portion be formed of any one of a plurality of materials constituting two thermopiles, and it is preferable that each of the heater portion, the first lead portion, and the second lead portion be formed of a material selected from among the plurality of materials constituting two thermopiles.

In a case where a shape extending in the first direction (a direction which is an arrangement direction of the hot junctions and is an extension direction of the heater portion) is adopted as each of the first lead portion and the second lead portion, it is preferable to provide two through holes interposing the first lead portion therebetween and two through holes interposing the second lead portion therebetween in a region on the cavity of the thin film-like portion when seen from above in order to make heat less likely to escape in the first direction.

Further, in order to make heat less likely to escape in the first direction, a through hole intersecting a virtual line segment obtained by extending the heater portion in the first direction may be provided in each of two portions on an outer side of both ends of the two thermopiles in the first direction on a region on the cavity of the thin film-like portion when seen from above, and each of the first lead portion and the second lead portion may have a shape that bypasses the through hole. Meanwhile, in a case where this configuration is adopted, the lead portions may have a shape that surrounds the through hole in order to equalize the amounts of heat transferred to the thermopiles side by the lead portions.

### Advantageous Effects of Invention

According to the present invention, it is possible to provide a flow sensor chip capable of preventing power from being wasted when a heater is electrified.

### Brief Description of Drawings

[Fig. 1] Fig. 1 is a plan view illustrating a configuration of a thermal flow sensor chip of the related art.
[Fig. 2] Fig. 2 is a plan view of a flow sensor chip according to a first embodiment.
[Fig. 3] Fig. 3 is a cross-sectional view of the flow sensor chip according to the first embodiment along line A-O-A in Fig. 2.
[Fig. 4] Fig. 4 is a diagram illustrating a schematic configuration of a thermopile in the flow sensor chip.
[Fig. 5A] Fig. 5A is a cross-sectional view (Part 1) illustrating an example of a manufacturing step for the flow sensor chip.
[Fig. 5B] Fig. 5B is a cross-sectional view (Part 2) illustrating an example of a manufacturing step for the flow sensor chip.
[Fig. 5C] Fig. 5C is a cross-sectional view (Part 3) illustrating an example of a manufacturing step for the flow sensor chip.
[Fig. 5D] Fig. 5D is a cross-sectional view (Part 4) illustrating an example of a manufacturing step for the flow sensor chip.
[Fig. 5E] Fig. 5E is a cross-sectional view (Part 5) illustrating an example of a manufacturing step for the flow sensor chip.
[Fig. 5F] Fig. 5F is a cross-sectional view (Part 6) illustrating an example of a manufacturing step for the flow sensor chip.
[Fig. 6] Fig. 6 is a plan view of a flow sensor chip including a heater in which the width of an end is increased.
[Fig. 7] Fig. 7 is a plan view of a flow sensor chip according to a second embodiment.
[Fig. 8A] Fig. 8A is a diagram illustrating a schematic configuration of a thermopile that can be applied to the flow sensor chips according to the embodiments.
[Fig. 8B] Fig. 8B is a diagram illustrating a schematic configuration of a thermopile that can be applied to the flow sensor chips according to the embodiments.
[Fig. 9] Figs. 9A and 9B are diagrams illustrating a heater portion that can be applied to the flow sensor chips according to the embodiments.

### Description of Embodiments

Hereinafter, embodiments of the present invention will be described with reference to the drawings.

### «First embodiment»

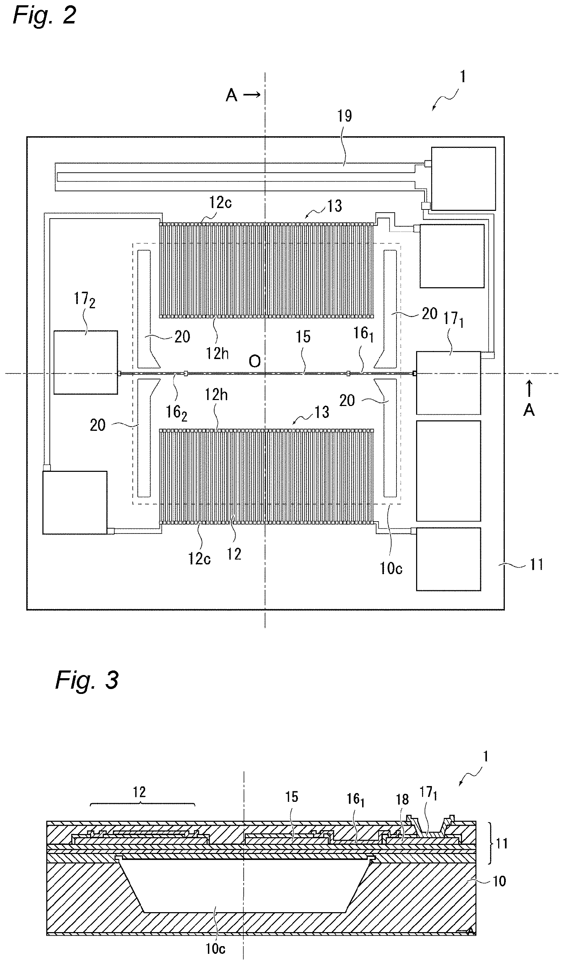

Fig. 2 illustrates a plan view of a thermal flow sensor chip 1 according to a first embodiment of the present invention, and Fig. 3 illustrates a cross-sectional view of the flow sensor chip 1 along line A-O-A in Fig. 2. Meanwhile, in Fig. 3, a portion provided with a temperature sensor 19 (Fig. 2) is not illustrated. In addition, hereinafter, a right-left direction in Fig. 2 will be referred to as a first direction.

As illustrated in Fig. 2, a thin film-like portion 11 includes two pairs of thermopiles 13. A thermopile 13 is a temperature difference sensor in which a plurality of thermocouples 12 are connected in series. The thermopiles 13 in the thin film-like portion 11 are formed such that hot junctions 12h of the plurality of thermocouples 12 are lined up in the first direction (the right-left direction in Fig. 2). In addition, the thermopiles 13 are formed such that a plurality of cool junctions 12c are positioned on a substrate portion 10 other than the cavity 10c and face a plurality of hot junctions 12h of the thermopiles 13.

As illustrated in Fig. 3, the flow sensor chip 1 according to the present embodiment is a sensor (sensor chip) in which the thin film-like portion 11 is provided on a first surface of the substrate portion 10 having the cavity 10c that opens on the first surface (an upper surface in Fig. 3) side.

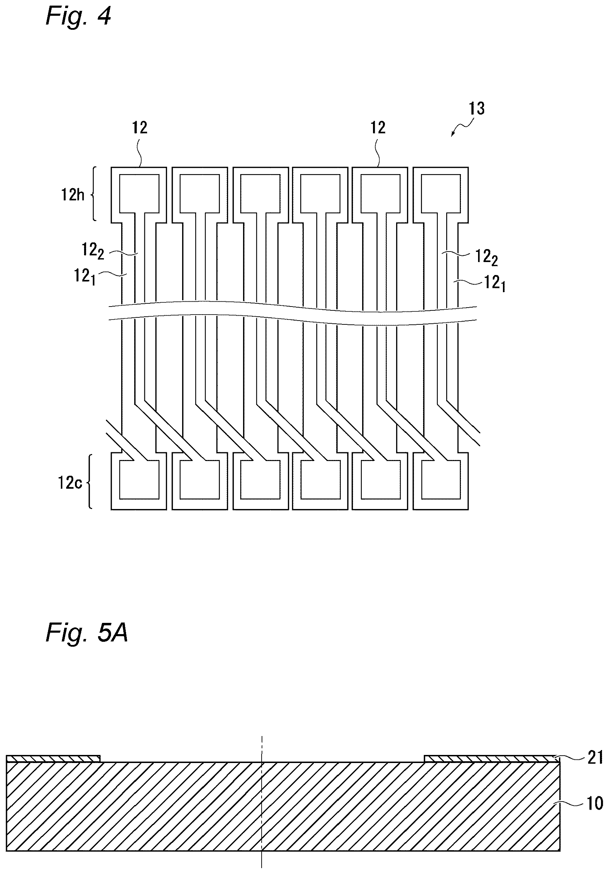

Meanwhile, each of the thermopiles 13 of the flow sensor chip 1 according to the present embodiment is configured such that the plurality of thermocouples 12 are connected to each other as illustrated in Fig. 4. Further, in each of the thermopiles 13, N-type polysilicon (polysilicon injected with P) and Al (aluminum) are adopted as constituent materials of a first electrode 12₁ and a second electrode 12₂ of each of the thermocouples 12.

The thin film-like portion 11 (Fig. 2) also includes a temperature sensor 19, a heater portion 15 extending in the first direction which is disposed between two thermopiles 13, a lead portion 16₁ connected to an end of the heater portion 15, and a lead portion 16₂ connected to the other end of the heater portion 15.

The lead portions 16 (16₁ and 16₂) are conducting paths formed of a material (to be described later in detail) having an electrical conductivity higher than an electrical conductivity (hereinafter referred to as a heater conductivity) of a constituent material of the heater portion 15. The temperature sensor 19 is a resistance temperature sensor for measuring a reference temperature used as the temperature of a cool junction 12c of each of the thermopiles 13.

The thin film-like portion 11 also includes two electrode pads 17₁ and 17₂ between which a voltage is applied when the heater portion 15 is electrified. As illustrated in Fig. 3, the electrode pad 17₁ is connected to an end of the lead portion 16₁ on a side which is not connected to the heater portion 15, through a conductive portion 18 formed of a material having an electrical conductivity equal to or greater than a heater conductivity (an electrical conductivity of the constituent material of the heater portion 15). Similarly, the electrode pad 17₂ is also connected to an end of the lead portion 16₂ on a side which is not connected to the heater portion 15, through a conductive portion formed of a material having an electrical conductivity equal to or greater than a heater conductivity (an electrical conductivity of the constituent material of the heater portion 15). Hereinafter, a series-connection body provided between the electrode pads 17₁ and 17₂, such as the heater portion 15, will be referred to as a heater.

Two through holes 20 are provided with the lead portion 16₁ therebetween in a region on the outer side of the right ends of two thermopiles 13 in Fig. 1 within the region on the cavity 10c of the thin film-like portion 11. Two through holes 20 are also provided with the lead portion 16₂ therebetween in a region on the outer side of the left ends of two thermopiles 13 in Fig. 1 within the region on the cavity 10c of the thin film-like portion 11. These through holes 20 function as introduction ports for an etching solution on the substrate portion 10 side when the flow sensor chip 1 is manufactured, and functions as configurations for reducing the amount of heat flowing out from the heater portion 15 when the flow sensor chip 1 is used.

In addition, the flow sensor chip 1 according to the present embodiment is configured such that the heater portion 15 is formed of N-type polysilicon which is one constituent material of the thermopile 13 (thermocouple 12), and the lead portions 16 are formed of Al which is the other constituent material of the thermopile 13.

A resistivity (a reciprocal of an electrical conductivity) of Al is approximately a few hundredths of a resistivity of N-type polysilicon. Thus, power consumption in the lead portions 16 of the flow sensor chip 1 is approximately a few hundredths of power consumption in a case where the constituent material is N-type polysilicon. However, a thermal conductivity of Al is approximately 10 times the thermal conductivity of N-type polysilicon. For this reason, when the cross-sectional shape of each lead portion 16 of the flow sensor chip 1 is set to have the same shape as the flow sensor chip (hereinafter referred to a sensor having a configuration of the related art) in which the entire heater is formed of N-type polysilicon, the amount of power consumption in each lead portion 16 is smaller than that of a sensor having a configuration of the related art, but heat generated by the heater portion 15 escapes to the outside more easily than the sensor having a configuration of the related art. In order to prevent such a problem from occurring, when the thermal flow sensor chip 1 is designed, the shape (mainly the width) of each lead portion 16 is determined such that the amount of heat transfer in a case where the heater portion 15 is heated due to electrification is equal to or less than a desired amount.

Even when the shape of each lead portion 16 is determined in this manner, Al has a high electrical conductivity, and thus the resistance of each lead portion 16 becomes lower than the resistance of a lead portion formed of N-type polysilicon. Thus, when the above-described configuration of the flow sensor chip 1 is adopted, it is possible to obtain a sensor in which power is not wasted when a heater (a series-connection body, such as the heater portion 15, which is provided between the electrode pads 17₁ and 17₂) is electrified.

In addition, when the configuration of the flow sensor chip 1 is adopted, the heater portion 15 can be formed at the time of forming the first electrode 12₁, and the lead portions 16 can be formed at the time of forming the second electrode 12₂. Thus, the flow sensor chip 1 can be manufactured in the same number of steps as a sensor having a configuration of the related art.

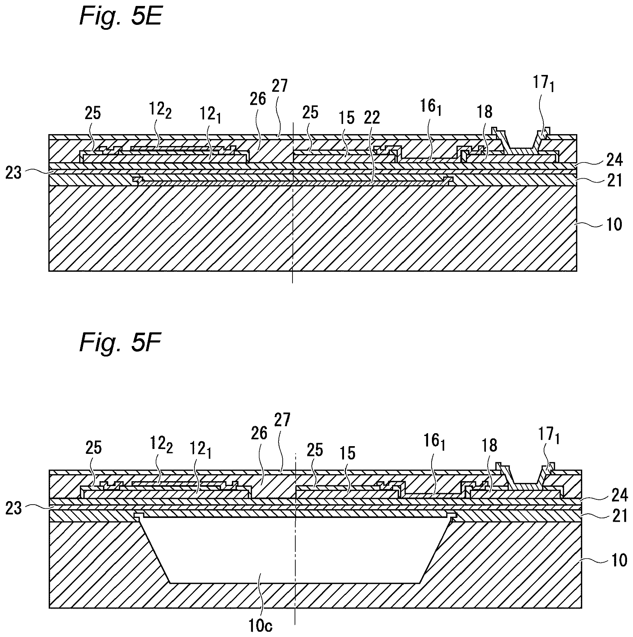

Hereinafter, an example of manufacturing steps for the flow sensor chip 1 that can be manufactured in the same number of steps as a sensor having a configuration of the related art will be described using Figs. 5A to 5F. Meanwhile, Figs. 5A to 5F are cross-sectional views along line A-O-A, similar to Fig. 3.

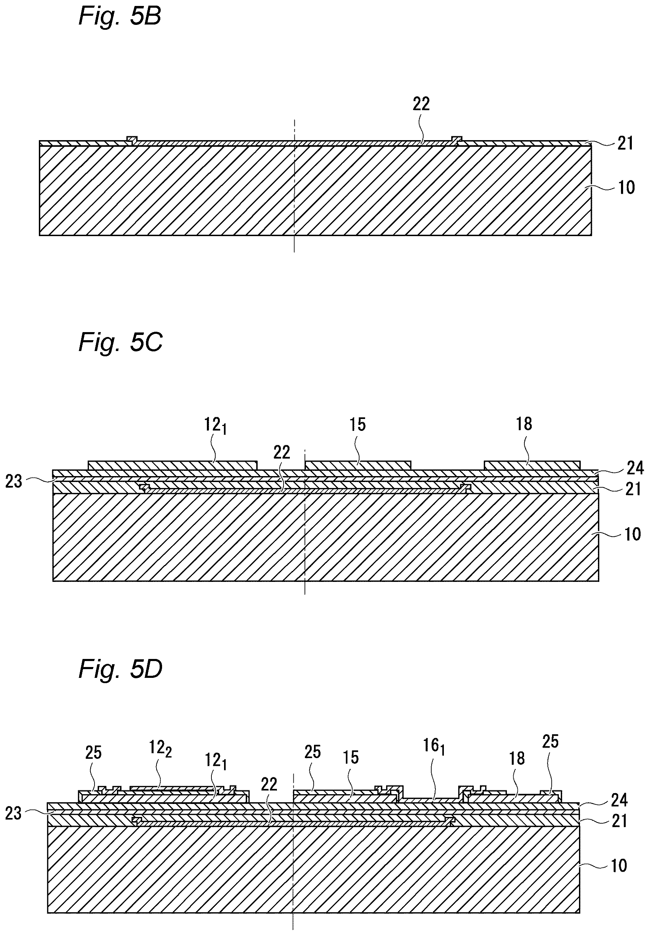

When the flow sensor chip 1 is manufactured, first, a SiO₂ film 21 is formed on a first surface of a single crystal silicon substrate (hereinafter also referred to as a substrate 10) serving as the substrate portion 10. Next, a portion serving as an opening of the cavity 10c is removed from the SiO₂ film 21 (Fig. 5A). Thereafter, a sacrificial layer 22 having the same shape as the opening of the cavity 10c when seen from above is formed of polysilicon on the substrate 10 (Fig. 5B).

Next, SiO₂ is deposited to cover the sacrificial layer 22. Thereafter, a SiN film 23, a SiO₂ film 24, and an N-type polysilicon film are formed in that order on the SiO₂ film 21 having such a thickness as to cover the sacrificial layer 22. Meanwhile, the forming of the N-type polysilicon film means that P ions are injected into a polysilicon film after forming the polysilicon film.

In addition, the first electrodes 12₁ of the respective thermocouples 12, the heater portion 15, and the conductive portion 18 are formed by patterning the N-type polysilicon film (Fig. 5C).

After the heater portion 15 and the like are formed, an insulating film (SiO₂ film) 25 is formed, and then contact openings are formed in various portions of the insulating film 25. Next, the second electrodes 12₂ of the respective thermocouples 12 and the conductive portion 18 are formed of Al (Fig. 5D).

After the second electrodes 12₂ and the like are formed, a SiO₂ film 26 and a SiN film 27 are formed. In addition, a whole electrode pad including the electrode pad 17₁ is formed of Au or the like. In addition, after the through holes 20 are formed, portions of the sacrificial layer 22 and the substrate 10 are removed using an etching solution such as tetramethylammonium hydroxide (TMAH), thereby forming the cavity 10c (Fig. 5F).

As described above, in the flow sensor chip 1 according to the present embodiment, the end sides (the lead portions 16₁ and 16₂) of the heater are formed of a material having an electrical conductivity higher than that of the constituent material of the heater portion 15 which is a main portion of the heater. Thus, according to the flow sensor chip 1, it is possible to prevent power from being wasted when the heater is electrified.

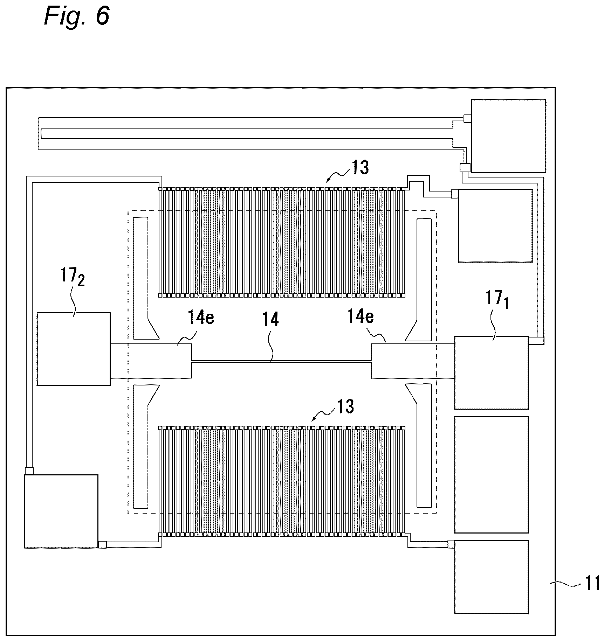

Meanwhile, even when the heater 14 having a shape as illustrated in Fig. 6, that is, the heater 14 having an end 14e of which the resistance is reduced by increasing the width thereof, it is possible to prevent power from being wasted during the electrification of the heater 14. However, it is known that the arrangement of the thermopiles 13 and the through holes 20 as etching holes is limited in order to obtain the high-performance flow sensor chip 1, and thus it is difficult to greatly increase the width of the end 14e. In addition, when the configuration illustrated in Fig. 6 is adopted, the thermal conductivity of the end 14e is increased, which results in a problem that the amount of heat flowing out to the electrode pads 17 increases.

On the other hand, when the configuration of the flow sensor chip 1 mentioned above is adopted, the resistance of the lead portion 16 can be reduced in such a manner that it is not necessary to increase the width of the ends (16₁ and 16₂) of the heater, and the thermal conductivity of the ends of the heater does not increase. In addition, it is also possible to make the film thickness of the end of the heater different from the film thickness of the heater portion 15. Thus, when the configuration of the flow sensor chip 1 is adopted, it is possible to obtain a sensor that does not cause the above-described problem.

### «Second Embodiment»

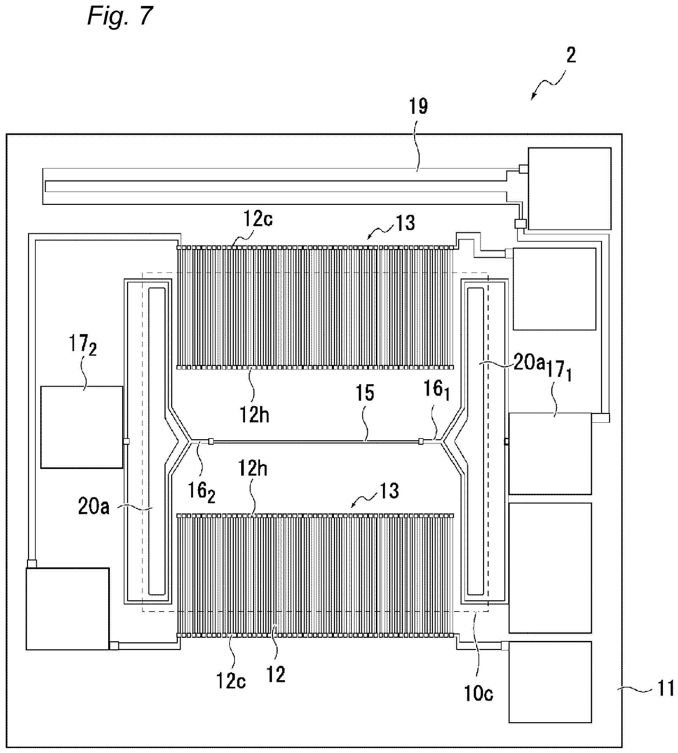

Fig. 7 illustrates a plan view of a flow sensor chip 2 according to a second embodiment of the present invention. Hereinafter, a configuration of the flow sensor chip 2 will be described focusing on differences from the flow sensor chip 1. Meanwhile, in the following description, top, bottom, left, and right are top, bottom, left, and right in Fig. 7.

The flow sensor chip 2 is basically provided with two through holes 20a instead of four through holes 20 of the flow sensor chip 1 (see Fig. 2). As illustrated in the drawing, the through holes 20a are provided on the outer side of ends of two thermopiles 13 in the right-left direction in a region on a cavity 10c of a thin film-like portion 11. In addition, the through holes 20a are formed to extend to the vicinities of top-side and bottom-side boundaries of the cavity 10c.

The through holes 20a have the above-described shape (that is, a shape that intersects a virtual line segment obtained by extending a heater portion 15 in a first direction), and thus electrode pads 17 (17₁, 17₂) and the heater portion 15 cannot be connected by a linear conducting path in the flow sensor chip 2. For this reason, in the flow sensor chip 2, lead portions 16 (16₁, 16₂) including a pattern bypassing the top-side of the through hole 22 and a pattern bypassing the bottom-side of the through hole 22.

As is apparent from the above description, the thermal flow sensor chip 2 is an improved one of the flow sensor chip 1 so that heat of the heater portion 15 is less likely to escape in the right-left direction. Thus, when the configuration of the thermal flow sensor chip 2 is adopted, it can be said that the temperature of the heater portion 15 is less likely to fall than that of the flow sensor chip 1.

### «Modification Example»

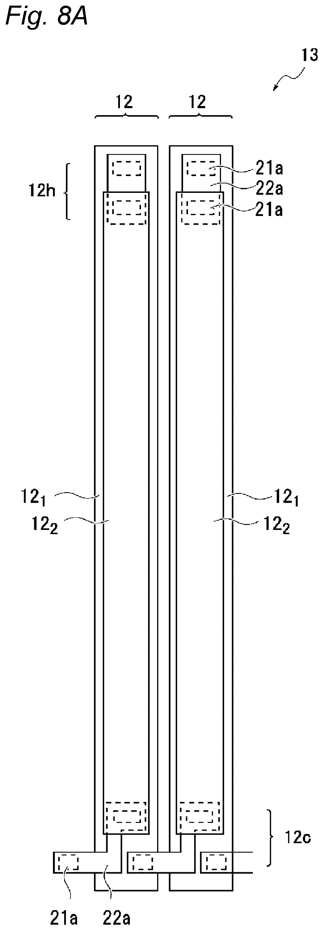

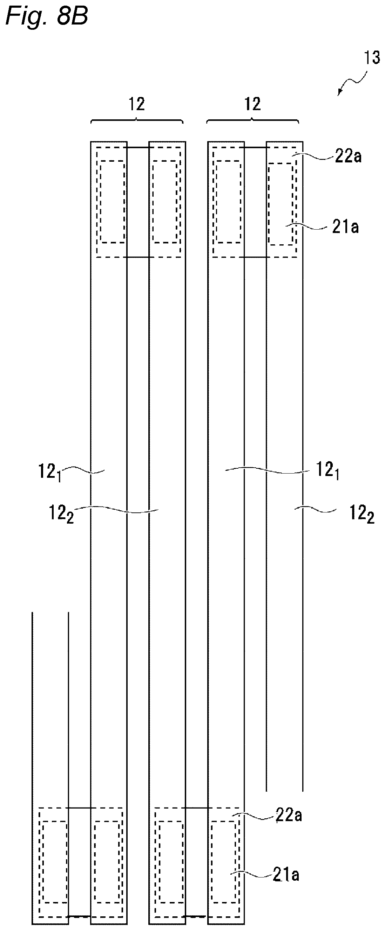

The above-described flow sensor chips 1 and 2 can be modified in various ways. For example, a thermopile 13 having a configuration illustrated in Fig. 8A, that is, the thermopile 13 in which two adjacent thermocouples 12 are connected to each other by a contact 21a and a conductive member 22a may be adopted for the flow sensor chips 1 and 2. A thermopile 13 having a configuration illustrated in Fig. 8B, that is, the thermopile 13 in which a first electrode 12₁ and a second electrode 12₂ are not laminated may be adopted for the flow sensor chips 1 and 2.

In addition, as a constituent material of one or both of the thermopiles 13, materials other than the above-described materials (polysilicon, Al), for example, Au, Bi, Sb, Te, Cu, Pb, and P-type polysilicon may be used. However, from the viewpoint of thermoelectric performance and affinity with a semiconductor process, the constituent materials of the thermopiles 13 are preferably polysilicon and Al.

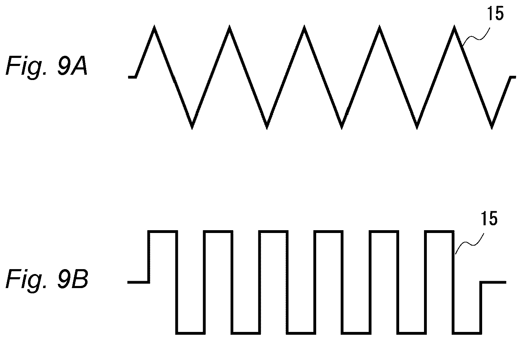

The heater portion 15 and/or the lead portion 16 may be formed of a material other than the constituent materials of the thermopiles 13. As illustrated in Figs. 9A and 9B, the shape of the heater portion 15 may be a shape like a triangular wave or a shape like a rectangular wave. The small-sized heater portion 15 having a shape as illustrated in Figs. 9A and 9B may be provided at the center of the thin film-like portion 11 to achieve the high performance of the flow sensor chips 1 and 2.

The lead portion 16 of the flow sensor chip 2 (Fig. 7) may have only a pattern that bypasses the top-side or bottom-side of the through hole 20a. However, from the viewpoint of equalizing the amounts of heat transferred to the thermopiles 13 side by the lead portions 16, the shapes of the lead portions 16 are preferably as illustrated in Fig. 8. Further, in order to sufficiently suppress heat generation and not to interfere with the arrangement of the thermopiles 13 and the etching holes (the through holes 20a), it is preferable that the constituent material of the lead portion 16 have an electrical conductivity 10 times or more than that of the material of the heater portion 15.

It is natural that the cavity 10c of the substrate portion 10 may be opened on both surfaces of the substrate portion 10 and that the lead portions 16 may be connected directly to the electrode pads 17.

### «Appendix»

A thermal flow sensor chip (1;2) including:
a substrate portion (10) which includes a cavity (10c) opening on a first surface side; and
a thin film-like portion (11) which is provided on the first surface of the substrate portion (10),
wherein the thin film-like portion (11) includes
two thermopiles (13) having a plurality of hot junctions (12h) that are lined up in a first direction and disposed to face each other,
a heater portion (15) disposed between the two thermopiles (13) and extending in the first direction,
a first lead portion (16₁), connected to an end of the heater portion (15), which is formed of a material having an electrical conductivity higher than a heater conductivity which is an electrical conductivity of a constituent material of the heater portion (15),
a second lead portion (16₂), connected to the other end of the heater portion (15), which is formed of a material having an electrical conductivity higher than the heater conductivity,
a first electrode pad (17₁) connected, directly or through a connection portion (18) formed of a material having an electrical conductivity equal to or greater than the heater conductivity, to an end of the first lead portion (16₁) on a side which is not connected to the heater portion (15), and
a second electrode pad (17₂) connected, directly or through a connection portion formed of a material having an electrical conductivity equal to or greater than the heater conductivity, to an end of the second lead portion (16₂) on a side which is not connected to the heater portion (15).

### Reference Signs List

- 1, 2: Flow sensor chip
- 10: Substrate portion
- 10c: Cavity
- 11: Thin film-like portion
- 12: Thermocouple
- 12c: Cool junction
- 12h: Hot junction
- 12₁: First electrode
- 12₂: Second electrode
- 13: Thermopile
- 14: Heater
- 15: Heater portion
- 16₁, 16₂: Lead portion
- 17₁, 17₂: Electrode pad
- 18: Conductive portion
- 19: Temperature sensor
- 20, 20a: Through hole
- 21, 24, 26: SiO₂ film
- 22: Sacrificial layer
- 23, 27: SiN film
- 25: Insulating film
- 21a: Contact
- 22a: Conductive member

## Claims

1. A thermal flow sensor chip comprising:
a substrate portion which includes a cavity opening on a first surface side; and
a thin film-like portion which is provided on the first surface of the substrate portion,
wherein the thin film-like portion includes
two thermopiles having a plurality of hot junctions that are lined up in a first direction and disposed to face each other,
a heater portion disposed between the two thermopiles and extending in the first direction,
a first lead portion, connected to an end of the heater portion, which is formed of a material having an electrical conductivity higher than a heater conductivity which is an electrical conductivity of a constituent material of the heater portion,
a second lead portion, connected to the other end of the heater portion, which is formed of a material having an electrical conductivity higher than the heater conductivity,
a first electrode pad connected, directly or through a connection portion formed of a material having an electrical conductivity equal to or greater than the heater conductivity, to an end of the first lead portion on a side which is not connected to the heater portion, and
a second electrode pad connected, directly or through a connection portion formed of a material having an electrical conductivity equal to or greater than the heater conductivity, to an end of the second lead portion on a side which is not connected to the heater portion.

2. The flow sensor chip according to claim 1, wherein any one of the heater portion, the first lead portion, and the second lead portion is formed of any one of a plurality of materials constituting the two thermopiles.

3. The flow sensor chip according to claim 1, wherein each of the heater portion, the first lead portion, and the second lead portion is formed of a material selected from among a plurality of materials constituting the two thermopiles.

4. The flow sensor chip according to any one of claims 1 to 3, wherein
each of the first lead portion and the second lead portion extends in the first direction, and
two through holes interposing the first lead portion therebetween and two through holes interposing the second lead portion therebetween are provided in a region on the cavity of the thin film-like portion when seen from above.

5. The flow sensor chip according to any one of claims 1 to 3, wherein
a through hole intersecting a virtual line segment obtained by extending the heater portion in the first direction is provided in each of two portions on an outer side of both ends of the two thermopiles in the first direction in a region on the cavity of the thin film-like portion when seen from above, and
each of the first lead portion and the second lead portion has a shape that bypasses the through hole.

6. The flow sensor chip according to claim 5, wherein each of the first lead portion and the second lead portion has a shape surrounding the through hole.
